# FASCICULE DE BREVET EUROPEEN

(11) **EP 3 827 118 B1**
(45) Date de publication et mention de la délivrance du brevet: **12.07.2023**
(21) Numéro de dépôt: 19753172.6
(22) Date de dépôt: 18.07.2019
(51) Int. Cl.: D03D 1/00, D03D 11/00, D03D 25/00, B29B 11/16, D03D 15/267

(54) **TEXTURE FIBREUSE POUR CARTER EN MATÉRIAU COMPOSITE À RÉSISTANCE AU CISAILLEMENT AMELIORÉE**
FASERTEXTUR FÜR EIN GEHÄUSE AUS VERBUNDMATERIAL MIT VERBESSERTER SCHERFESTIGKEIT
FIBER TEXTURE FOR A CASING MADE OF COMPOSITE MATERIAL WITH IMPROVED SHEAR RESISTANCE

(30) Priorité: 23.07.2018 FR 1856795
(43) Date de publication de la demande: 02.06.2021
(73) Titulaire: SAFRAN, 75015 Paris (FR); SAFRAN AIRCRAFT ENGINES, 75015 Paris (FR)
(72) Inventeur: GRELIN, Hervé, 77550 MOISSY-CRAMAYEL (FR); CHARLEUX, François, 77550 MOISSY-CRAMAYEL (FR); COUPE, Dominique, Marie, Christian, 77550 MOISSY-CRAMAYEL (FR)
(74) Mandataire: Cabinet Beau de Loménie
(86) Numéro de dépôt international: PCT/FR2019/051806
(87) Numéro de publication internationale: WO 2020/021184

(56) Documents cités:
- WO-A1-2017/109403
- CN-A- 101 713 115
- FR-A1- 2 706 913
- US-A- 5 538 781

## Description

### Arrière-plan de l'invention

La présente invention concerne une texture fibreuse qui peut être utilisée, en particulier mais non exclusivement, pour former le renfort fibreux d'un carter de soufflante de moteur aéronautique en matériau composite.

La fabrication d'un carter en matériau composite débute par la réalisation d'une texture fibreuse sous forme de bande, la texture fibreuse étant réalisée par tissage tridimensionnel entre une pluralité de couches de fils de chaîne et une pluralité de couches de fils de trame. La texture fibreuse ainsi obtenue est enroulée sur plusieurs tours sur un moule ou outillage présentant la forme du carter à réaliser et maintenue entre le moule et des segments formant contre-moule de manière à obtenir une préforme fibreuse.

Une fois la préforme fibreuse réalisée, c'est-à-dire à la fin de l'enroulement de la texture fibreuse, l'outillage portant la préforme fibreuse est fermé par des contres-moules puis transporté jusqu'à une étuve ou four dans lequel la densification de la préforme par une matrice est réalisée, la matrice pouvant être notamment obtenue par injection et polymérisation d'une résine dans la préforme fibreuse.

Un carter de soufflante remplit trois fonctions principales, à savoir :
- assurer la liaison de pièces du moteur entre elles,
- définir la veine d'entrée d'air dans le moteur,
- assurer la rétention en retenant les débris ingérés à l'intérieur du moteur, ou les aubes ou fragments d'aubes projetés par centrifugation, afin d'éviter qu'ils ne traversent le carter et n'atteignent d'autres parties de l'aéronef.

Les deux premières fonctions s'avèrent peu exigeantes en termes de propriétés mécaniques mais sont actives en permanence. En revanche, la troisième fonction, même si elle est très peu utilisée, est très exigeante en termes de propriétés mécaniques.

Pendant un évènement de perte d'aube de soufflante (FBO), l'évènement peut se scinder en différentes phases pour le carter :
Phase 1 : contact entre l'aube et le carter,
Phase 2 : cisaillement par le bord d'attaque de l'aube perdue de la matière du carter,
Phase 3 : mise en déformation du carter sous l'effet d'une énergie importante,
Phase 4 : restitution de l'énergie emmagasinée dans le carter liée au fragment de l'aube perdue,
Phase 5 : établissement de la rotation en moulinet (« Windmilling »).

Durant la phase 1, c'est une importante raideur qui est demandée au carter afin de se déformer au minimum sous l'effet du contact avec l'aube. Durant cette phase de l'énergie est stockée par le carter sous forme de déformation.

Durant la phase 2, le matériau du carter doit montrer des propriétés de cisaillement. Le matériau est cisaillé et l'énergie est dissipée par ce cisaillement.

Durant la phase 3, le projectile pénètre plus difficilement le carter et l'énergie emmagasinée par le projectile est intégralement absorbée par la déformation du carter. Durant cette phase, un haut taux de déformation est demandé au matériau du carter.

Durant la phase 4, l'énergie est restituée par déformation du carter pour revenir à la géométrie initiale.

Durant la phase 5, le carter est soumis à une sollicitation en fatigue avec un chargement mécanique important.

Les carters de l'état de la technique assurent globalement cette fonction de manière satisfaisante. Il demeure toutefois possible d'améliorer encore la résistance mécanique de certains carters à l'impact avec un projectile, en particulier avec une aube lorsqu'il y a détachement de cette dernière et projection de celle-ci sur le carter.

Un exemple de carter de soufflante en matériau composite avec une zone de rétention renforcée est décrit notamment dans le document WO 2017/109403.

### Objet et résumé de l'invention

L'invention vise, selon un premier aspect, une texture fibreuse présentant une forme de bande s'étendant dans une direction longitudinale sur une longueur déterminée entre une partie proximale et une partie distale et dans une direction latérale sur une largeur déterminée entre un premier bord latéral et un deuxième bord latéral, la texture fibreuse présentant un tissage tridimensionnel ou multicouche entre une pluralité de couches de fils ou torons de chaîne s'étendant dans la direction longitudinale et une pluralité de couches de fils ou torons de trame s'étendant dans la direction latérale, caractérisée en ce que la texture fibreuse comprend une première portion présente suivant la direction longitudinale entre la partie proximale et une partie intermédiaire, une ou plusieurs couches de fils ou torons de chaîne présentes du côté d'une face interne de la texture fibreuse comportant au moins en partie des fils ou torons en fibres de verre, les fils ou torons des autres couches de fils ou torons de chaîne comportant des fils ou torons en fibres de carbone, et en ce que la texture fibreuse comprend en outre une deuxième portion présente suivant la direction longitudinale entre la partie intermédiaire et la partie distale de ladite texture fibreuse, une ou plusieurs couches de la pluralité de couches de fils ou torons de chaîne présentes du côté d'une face externe de la texture fibreuse comportant au moins en partie des fils ou torons en fibres de verre, les fils ou torons des autres couches de la pluralité de couches de fils ou torons de chaîne comportant des fils ou torons en fibres de carbone, les fils ou torons de chaîne étant continus sur toute la longueur de la texture fibreuse.

La texture fibreuse est destinée à être enroulée en plusieurs tours afin de former un renfort fibreux de carter en matériau composite. La première portion est destinée à former la partie radialement interne de ce renfort fibreux (premier(s) tour(s) de l'enroulement). La deuxième portion est destinée à former la partie radialement externe de ce renfort fibreux (dernier(s) tour(s) de l'enroulement).

Les inventeurs ont constaté qu'il était possible d'améliorer la résistance du carter à l'impact, par exemple avec une aube détachée, par un placement judicieux de fils ou torons en fibre de verre parmi les fils ou torons en fibres de carbone dans la texture fibreuse. En effet, les fils ou torons en fibres de verre présentent une résistance au cisaillement et à l'allongement bien supérieure à celle présentée par les fils ou torons en fibres de carbone. Ainsi, la texture fibreuse selon l'invention comprend des fils ou torons de chaîne en fibres de verre dans la première portion destinée à former le début de l'enroulement et située du côté de l'impact avec l'aube (couches de fils ou torons de chaîne situés du côté de la face interne de la texture fibreuse), afin de conférer une plus grande résistance au cisaillement à cette première portion. On limite ainsi la profondeur de pénétration d'un projectile, par exemple une aube ou partie d'aube, impactant la surface interne du carter. On préserve ainsi une partie plus importante du matériau du carter, ce qui permet d'assurer efficacement la gestion des phases décrites ci-avant (notamment phases 2 à 5) lors d'un évènement de perte d'aube ou fraction d'aube.

Les autres couches de fils ou torons de chaîne dans la première portion sont constituées de fils ou torons en fibres de carbone afin de conserver une bonne rigidité dans cette première portion et limiter l'impact de l'utilisation de fils ou torons en fibres de verre, ceux-ci ayant une masse plus importante que les fils ou torons en fibres de carbone.

En outre, la texture fibreuse selon l'invention comprend des fils ou torons de chaîne en fibres de verre dans la deuxième portion, qui est destinée à former la ou les couches externes de l'enroulement. Dans la deuxième portion, les fils ou torons de chaîne en fibres de verre sont présents du côté de la face externe de la texture fibreuse. Le haut taux de déformation de la fibre de verre, plus élevé que celui de la fibre de carbone, permet de conférer une capacité de déformation élastique significative à cette deuxième portion, et pouvoir ainsi absorber l'énergie communiquée par l'aube en se déformant puis restituer cette énergie à l'aube en revenant à sa forme initiale (phases 3 et 4).

Les autres couches de fils ou torons de chaîne dans la deuxième portion sont constituées de fils ou torons en fibres de carbone afin de conserver une bonne rigidité dans cette deuxième portion et limiter l'impact de l'utilisation de fils ou torons en fibres de verre, ceux-ci ayant une masse plus important que les fils ou torons en fibres de carbone.

L'invention repose donc sur la mise en oeuvre de deux matériaux différents, à savoir le carbone et le verre, localisés dans des zones particulières du renfort fibreux, afin de répondre, de manière optimale, aux sollicitations du carter lors d'un évènement d'impact, par exemple une perte d'aube ou fraction d'aube, tout en limitant la masse de ce dernier.

Selon un aspect particulier de l'invention, les fils ou torons de chaîne en fibres de verre présents du côté de la face interne de la texture fibreuse dans la première portion remontent progressivement vers la face externe de la texture fibreuse dans la partie intermédiaire de manière à être présents du côté de la face externe de ladite texture dans la deuxième portion. Les fils ou torons de chaîne sont donc continus tout le long de la texture fibreuse, ce qui permet de conserver les propriétés mécaniques conférées par le tissage tridimensionnel ou multicouche (notamment résistance à la délamination et transmission des efforts) dans tout le renfort fibreux.

Dans un exemple de réalisation, une ou plusieurs couches de la pluralité couches de fils ou torons de trame présentes du côté de la face interne de la texture fibreuse dans la première portion sont constituées de fils ou torons en fibres de verre, les fils ou torons des autres couches de la pluralité couches de fils ou torons de trame étant constitués de fils ou torons en fibres de carbone. Lorsque c'est nécessaire, la résistance au cisaillement peut être encore augmentée dans la première portion de la texture fibreuse en utilisant des fils ou torons de trame en fibres de verre au niveau des fils ou torons de chaîne également en fibres de verre.

Dans un exemple de réalisation, une ou plusieurs couches de la pluralité couches de fils ou torons de trame présentes du côté de la face externe de la texture fibreuse dans la deuxième portion sont constituées de fils ou torons en fibres de verre, les fils ou torons des autres couches de la pluralité couches de fils ou torons de trame étant constitués de fils ou torons en fibres de carbone. Lorsque c'est nécessaire, la capacité de déformation peut être encore augmentée dans la deuxième portion de la texture fibreuse en utilisant des fils ou torons de trame en fibres de verre au niveau des fils ou torons de chaîne également en fibres de verre.

L'invention vise également une préforme fibreuse de carter aéronautique comprenant un enroulement sur plusieurs tours d'une texture fibreuse telle que décrite plus haut, la première portion étant située du côté d'une face radialement interne de la préforme, et la deuxième portion étant située du côté d'une face radialement externe de la préforme.

L'invention vise également un carter de turbine à gaz en un matériau composite, comprenant un renfort fibreux constitué d'une préforme fibreuse telle que décrite plus haut, et une matrice densifiant le renfort fibreux.

Dans un exemple de réalisation, ledit carter est un carter de soufflante de turbine à gaz.

L'invention vise également un moteur aéronautique à turbine à gaz ayant un carter tel que décrit plus haut.

L'invention a encore pour objet un procédé de fabrication d'une texture fibreuse par tissage tridimensionnel ou multicouche entre une pluralité de couches de fils ou torons de chaîne s'étendant dans une direction longitudinale et une pluralité de couches de fils ou torons de trame s'étendant dans la direction latérale, la structure fibreuse présentant une forme de bande s'étendant dans la direction longitudinale sur une longueur déterminée entre une partie proximale et une partie distale et dans la direction latérale sur une largeur déterminée entre un premier bord latéral et un deuxième bord latéral, caractérisé en ce qu'il comprend le tissage d'une première portion présente suivant la direction longitudinale entre la partie proximale et une partie intermédiaire, une ou plusieurs couches de fils ou torons de chaîne présentes du côté d'une face interne de la texture fibreuse comportant au moins en partie des fils ou torons en fibres de verre, les fils ou torons des autres couches de fils ou torons de chaîne comportant des fils ou torons en fibres de carbone, et en ce qu'il comprend en outre le tissage d'une deuxième portion présente suivant la direction longitudinale entre la partie intermédiaire et la partie distale de ladite texture fibreuse, une ou plusieurs couches de la pluralité de couches de fils ou torons de chaîne présentes du côté d'une face externe de la texture fibreuse comportant au moins en partie des fils ou torons en fibres de verre, les fils ou torons des autres couches de la pluralité de couches de fils ou torons de chaîne comportant des fils ou torons en fibres de carbone, les fils ou torons de chaîne étant continus sur toute la longueur de la texture fibreuse.

Selon un aspect particulier de l'invention, les fils ou torons de chaîne en fibres de verre présents du côté de la face interne de la texture fibreuse dans la première portion remontent progressivement vers la face externe de la texture fibreuse dans la partie intermédiaire de manière à être présents du côté de la face externe de ladite texture dans la deuxième portion.

Dans un exemple de réalisation, une ou plusieurs couches de la pluralité couches de fils ou torons de trame présentes du côté de la face interne de la texture fibreuse dans la première portion sont constituées de fils ou torons en fibres de verre, les fils ou torons des autres couches de la pluralité couches de fils ou torons de trame étant constitués de fils ou torons en fibres de carbone.

Dans un exemple de réalisation, une ou plusieurs couches de la pluralité couches de fils ou torons de trame présentes du côté de la face externe de la texture fibreuse dans la deuxième portion sont constituées de fils ou torons en fibres de verre, les fils ou torons des autres couches de la pluralité couches de fils ou torons de trame étant constitués de fils ou torons en fibres de carbone.

### Brève description des dessins

D'autres caractéristiques et avantages de l'invention ressortiront de la description suivante, donnée à titre non limitatif, en référence aux dessins annexés, sur lesquels :
- la figure 1 est une vue schématique en perspective d'un métier à tisser montrant le tissage tridimensionnel d'une texture fibreuse,
- la figure 2 est une vue schématique en perspective d'une texture fibreuse conformément à un mode de réalisation de l'invention,
- la figure 3 est une coupe longitudinale prise au niveau de la première portion et d'une partie de la portion intermédiaire de la texture fibreuse de la figure 2 et montrant un plan d'armure de tissage,
- la figure 4 est une coupe longitudinale prise au niveau de la portion intermédiaire de la texture fibreuse de la figure 2 et montrant un plan d'armure de tissage,
- la figure 5 est une coupe longitudinale prise au niveau d'une partie de la portion intermédiaire et de la deuxième portion de la texture fibreuse de la figure 2 et montrant un plan d'armure de tissage,
- la figure 6 est une vue schématique en perspective montrant l'enroulement d'une texture fibreuse sur un outillage de mise en forme,
- la figure 7 est une demi-vue en coupe axiale d'une préforme de carter obtenue par enroulement d'une texture fibreuse comme montré sur la figure 6,
- la figure 8 est une vue en coupe montrant le positionnement de secteurs d'injection sur la préforme du carter de la figure 7,
- la figure 9 est une vue en perspective d'un moteur aéronautique conformément à un mode de réalisation de l'invention,
- la figure 10 est une coupe longitudinale prise au niveau de la première portion et d'une partie de la portion intermédiaire d'une variante de texture fibreuse selon l'invention et montrant un plan d'armure de tissage,
- la figure 11 est une coupe longitudinale prise au niveau de la portion intermédiaire de cette variante de texture fibreuse et montrant un plan d'armure de tissage,
- la figure 12 est une coupe longitudinale prise au niveau d'une partie de la portion intermédiaire et de la deuxième portion de cette texture fibreuse et montrant un plan d'armure de tissage.

### Description détaillée de modes de réalisation

L'invention s'applique d'une manière générale à des textures fibreuses destinées à la fabrication de carters en matériau composite, ces carters comportant un fût ou une virole avec des brides annulaires à leurs extrémités.

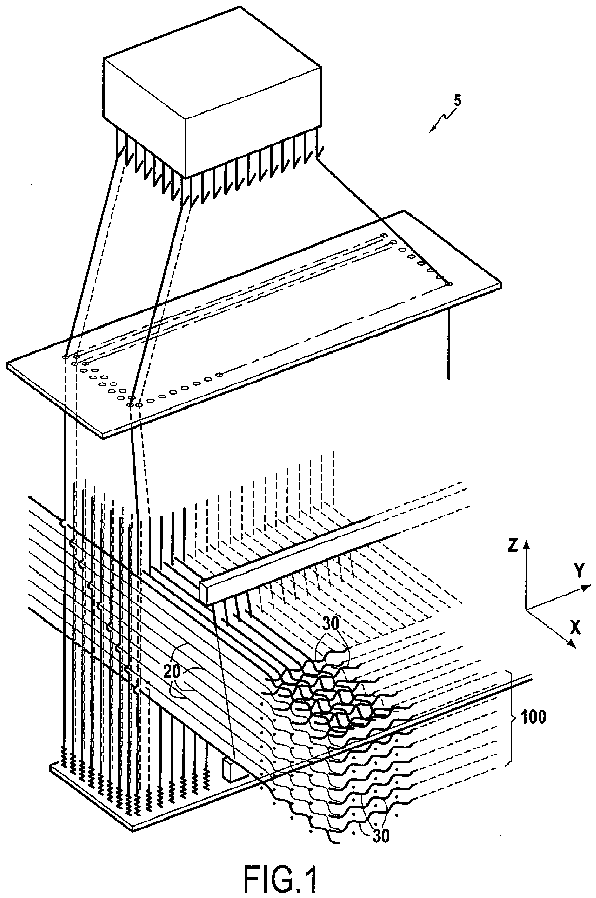

Comme représentée sur la figure 1, une texture fibreuse 100 est réalisée de façon connue par tissage au moyen d'un métier à tisser de type jacquard 5 sur lequel on a disposé un faisceau de fils de chaîne ou torons 20 en une pluralité de couches, les fils de chaîne étant liés par des fils ou torons de trame 30.

La texture fibreuse est réalisée par tissage tridimensionnel. Par « tissage tridimensionnel » ou « tissage 3D », on entend ici un mode de tissage par lequel certains au moins des fils de trame lient des fils de chaîne sur plusieurs couches de fils de chaîne ou inversement. La texture fibreuse peut présenter une armure de tissage interlock. Par tissage « interlock », on entend ici une armure de tissage dans laquelle chaque couche de fils de trame lie plusieurs couches de fils de chaîne, avec tous les fils d'une même colonne de trame ayant le même mouvement dans le plan de l'armure. D'autres armures de tissage sont envisageables.

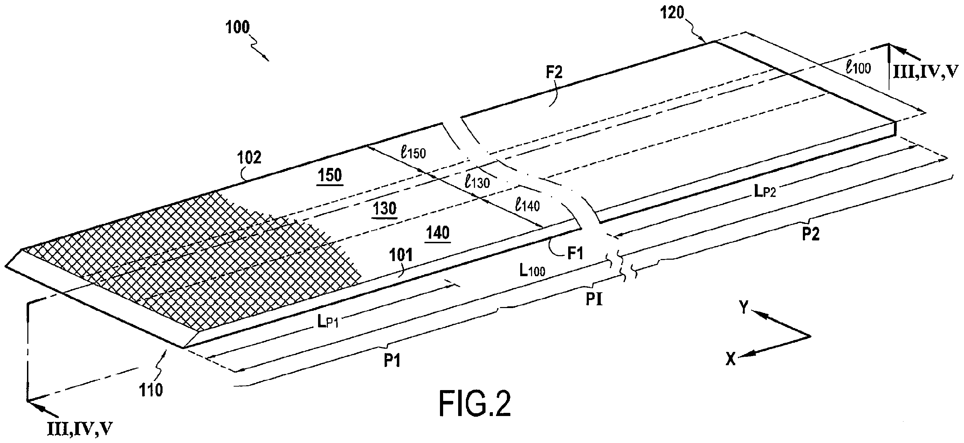

Comme illustrée sur la figure 2, la texture fibreuse 100 présente une forme de bande qui s'étend en longueur dans une direction longitudinale X correspondant à la direction de défilement des fils ou torons de chaîne 20 et en largeur ou transversalement dans une direction latérale Y entre un premier et un deuxième bords latéraux 101 et 102, la direction latérale Y correspondant à la direction des fils ou torons de trame 30. La texture fibreuse s'étend longitudinalement sur une longueur déterminée L₁₀₀ dans la direction X entre une partie proximale 110 destinée à former le début de l'enroulement d'une préforme fibreuse sur un outillage de mise en forme et une partie distale 120 destinée à former la fin de l'enroulement de la préforme fibreuse.

La texture fibreuse présente en outre une zone centrale 130 s'étendant sur une largeur déterminée I₁₃₀ dans la direction Y, la zone centrale 130 étant destinée à former le fût ou la virole du carter. La zone centrale 130 est destinée à être présente en regard des aubes et définit la zone de rétention du carter à obtenir. La zone centrale 130 est située en retrait des premier 101 et deuxième 102 bords latéraux et s'étend sur une largeur déterminée I₁₃₀ inférieure à la largeur I₁₀₀ de la texture 100. La zone centrale 130 est à une position intermédiaire entre les premier et deuxième bords latéraux 101 et 102. La zone centrale 130 est délimitée entre deux zones latérales 140 et 150 s'étendant chacune sur une largeur déterminée, respectivement I₁₄₀ et I₁₅₀, dans la direction Y. La première zone latérale 140 s'étend entre le premier bord latéral 101 et la zone centrale 130. La deuxième zone latérale 150 s'étend entre le deuxième bord latéral 102 et la zone centrale 130. Chacune des zones latérales 140 et 150 est destinée au moins en partie à former une bride annulaire du carter.

La longueur L₁₀₀ de la texture fibreuse 100 est déterminée en fonction de la circonférence de l'outillage ou du moule de mise en forme de manière à permettre la réalisation d'un nombre de tours déterminé de la texture fibreuse, par exemple quatre tours.

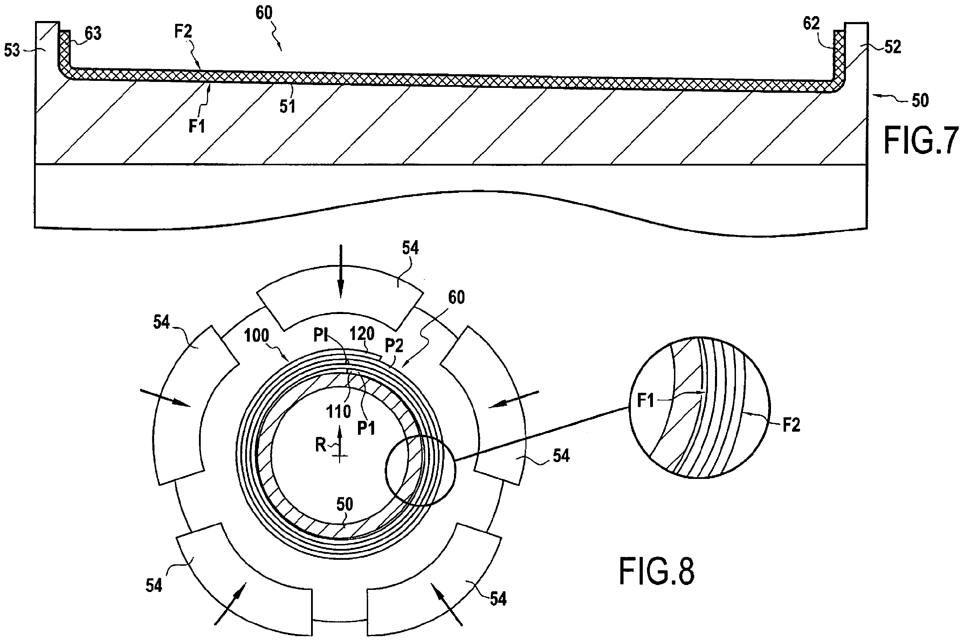

La texture fibreuse 100 comporte une première portion P1 présente entre la partie proximale 110 et une partie intermédiaire PI de la texture fibreuse. La première portion P1 est destinée à former la première partie de l'enroulement formant le renfort fibreux du carter (partie radialement interne de cet enroulement, voir figure 8 qui fait figurer la direction radiale R). La partie intermédiaire PI peut être située à mi-longueur de la texture fibreuse 100, ou plus généralement entre le quart et le trois-quart de la longueur de la texture fibreuse 100, par exemple.

La texture fibreuse 100 comporte en outre une deuxième portion P2, distincte de la première portion P1, et présente entre la partie intermédiaire PI et la partie distale 120. La deuxième portion P2 est destinée à former la deuxième partie de l'enroulement formant le renfort fibreux du carter (partie radialement externe de cet enroulement).

Dans l'exemple décrit ici, la texture fibreuse 100 s'étend sur une longueur L₁₀₀ permettant de faire quatre tours d'enroulement sur l'outillage ou du moule de mise en forme. Toujours dans l'exemple décrit ici, la première portion P1 s'étend sur une longueur L_{P1} définie de manière à correspondre au premier tour d'enroulement sur l'outillage ou moule de mise en forme (figure 8) tandis que la deuxième portion P2 s'étend sur une longueur L_{P2} définie de manière à correspondre au dernier tour d'enroulement sur l'outillage ou moule de mise en forme (figure 8), la portion PI s'étendant entre les portions P1 et P2 sur une longueur correspondant au troisième et quatrième tours d'enroulement sur l'outillage ou moule de mise en forme (figure 8).

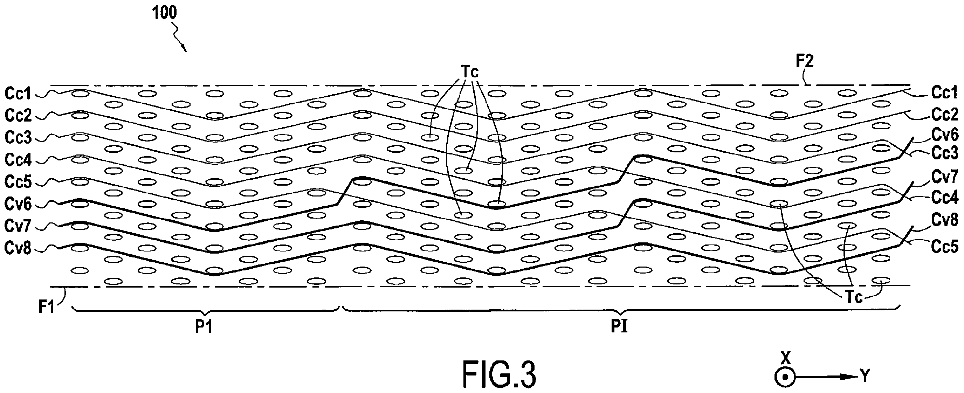

Les figures 3 à 5 illustrent chacune un plan de l'armure de tissage interlock de la texture fibreuse 100 situé respectivement au niveau de la première portion P1, de la portion intermédiaire PI et de la deuxième portion P2.

Les exemples de plans d'armure illustrés aux figures 3 à 5 comprennent 9 couches de trame Tc et 8 couches de chaîne Cc1 à Cc5 et Cv6 à Cv8. Dans l'armure interlock illustrée, une couche de trame est formée de deux demi-couches de trame adjacentes décalées l'une par rapport à l'autre dans le sens trame. On a donc 18 demi-couches de trame positionnées en quinconce. Chaque couche de chaîne lie 3 demi-couches de trame. On pourrait aussi adopter une disposition non en quinconce, les fils de chaîne de deux couches de chaîne voisines étant alignés sur des mêmes colonnes. Des armures de tissage de type interlock utilisables sont décrites dans le document WO 2006/136755.

Dans l'exemple illustré, la texture fibreuse comprend des fils ou torons de chaîne en fibres de verre, notés Cv6 à Cv8, ainsi que des fils ou torons de chaîne en fibres de carbone, notés Cc1 à Cc5. La texture fibreuse comprend également des fils ou torons de trame en fibres de carbone, notés Te.

Comme illustré à la figure 3, la première portion P1 comporte cinq couches de fils ou torons de chaîne présentes du côté de la face externe F2 de la texture fibreuse 100 comprenant des fils ou torons en fibres de carbone Cc1 à Cc5 et trois couches de fils ou torons de chaîne présentes du côté de la face interne F1 de la texture fibreuse comprenant des fils ou torons en fibres de carbone Cv6 à Cv8.

Une fois dans la portion intermédiaire PI, le tissage est piloté de manière à faire remonter progressivement les fils ou torons de chaîne en fibres de verre Cv6 à Cv8 vers la face externe F2 de la texture fibreuse par croisement avec des fils ou torons de chaîne en fibres de carbone Cc1 à Cc5. Sur la figure 3, le fils ou toron de chaîne en fibres de verre Cv6 remontent de deux couches de fils ou torons de trame en croisant successivement les fils ou torons de chaîne en fibres de carbone Cc5 et Cc4 qui eux descendent dans les couches de trame vers la surface interne F1 de la texture fibreuse.

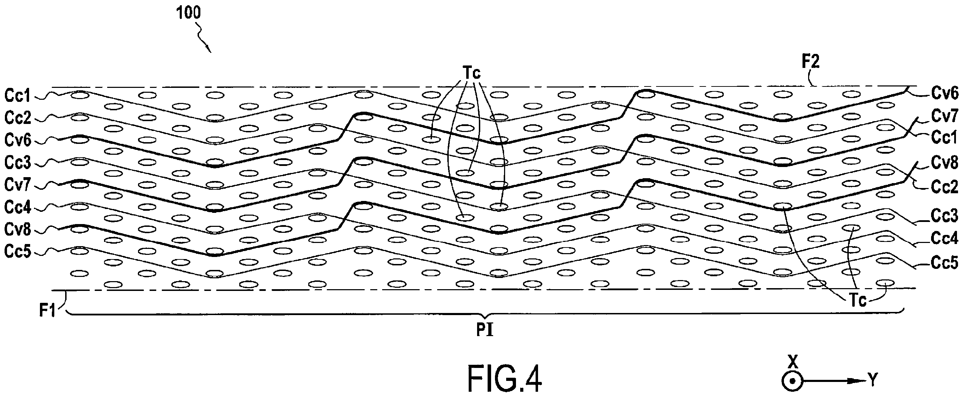

Sur la figure 4, les fils ou torons en fibres de verre Cv6 à Cv8 vers la face externe F2 continuent de remonter progressivement vers la surface externe F2 de la texture fibreuse tandis que les fils ou torons de chaîne en fibres de carbone Cc1 à Cc5 continuent de descendre progressivement vers la surface interne F1 de la texture fibreuse 100.

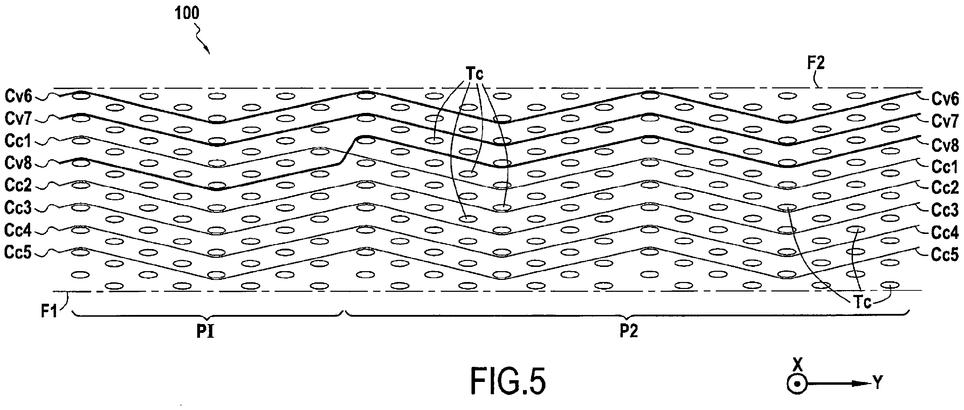

La figure 5 illustre la fin de la portion intermédiaire PI où les fils ou torons de chaîne en fibres de verre Cv6 à Cv8 sont maintenant présents du côté de la face externe F2 de la texture fibreuse 100. Ainsi, la deuxième portion P2 comporte cinq couches de fils ou torons de chaîne présentes du côté de la face interne F1 de la texture fibreuse 100 comprenant les fils ou torons de chaîne en fibres de carbone Cc1 à Cc5 et trois couches de fils ou torons de chaîne présentes du côté de la face externe F2 de la texture fibreuse 100 comprenant les fils ou torons en fibres de carbone Cv6 à Cv8.

Il y a donc une évolution de la nature des fils ou torons de chaîne lorsque l'on se déplace le long de la direction longitudinale X de la texture fibreuse 100.

On vient de décrire un exemple dans lequel la texture fibreuse a une armure de tissage interlock à 9 couches de trame et 8 couches de chaîne. On ne sort toutefois pas du cadre de l'invention lorsque le nombre de couches de trame et de chaîne est différent, ou lorsque la texture fibreuse présente une armure de tissage différente d'une armure interlock.

Il est par ailleurs avantageux que les fils ou torons en fibres de carbone et les fils ou torons en fibres de verre présents dans la texture fibreuse présentent section ou un volume similaire. Le rapport |V2-V1|/V1 peut, par exemple, être inférieur ou égal à 10%, où V1 désigne le volume des fils ou torons en fibres de carbone, V2 désigne le volume des fils ou torons en fibres de verre, et |.| désigne la valeur absolue.

La texture fibreuse peut ne comprendre des fils ou torons de chaîne en fibres de verre que sur une largeur déterminée suivant direction latérale Y. En particulier, les fils ou torons de chaîne en fibres de verre peuvent être utilisée seulement au niveau de la zone centrale 130 de la texture fibreuse ou d'une partie de celle-ci correspondant à une zone dite « zone de rétention » où l'impact avec une aube ou une fraction d'aube est susceptible de se produire.

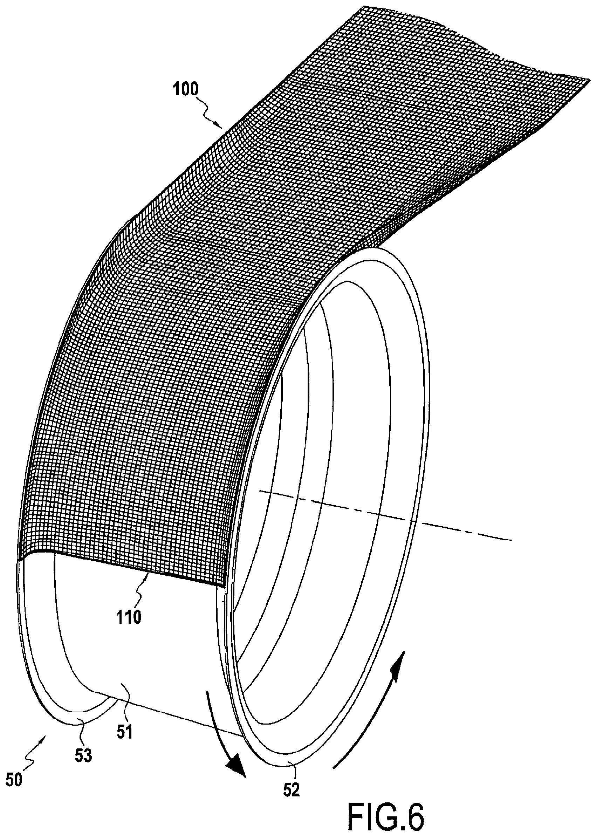

Comme illustré sur la figure 6, un renfort fibreux de carter est formé par enroulement sur un mandrin 50 de la texture fibreuse 100 décrite précédemment, le renfort fibreux constituant une préforme fibreuse tubulaire complète d'un carter formant une seule pièce. A cet effet, le mandrin 50 présente une surface externe 51 dont le profil correspond à la surface interne du carter à réaliser. Le mandrin 50 comporte également deux flasques 52 et 53 pour former des parties de préforme fibreuse 62 et 63 correspondant aux brides du carter (les brides 62 et 63 sont visibles à la figure 7). Le ou les tours situés radialement vers l'intérieur de la préforme correspondent à la première portion P1 de la texture fibreuse et le ou les tours situés radialement vers l'extérieur de la préforme correspondent à la deuxième portion P2 de la texture fibreuse.

La figure 7 montre une vue en coupe de la préforme fibreuse 60 obtenue après enroulement de la texture fibreuse 100 en plusieurs couches sur le mandrin 50. Le nombre de couches ou spires est fonction de l'épaisseur désirée et de l'épaisseur de la texture fibreuse. Il est de préférence au moins égal à 2. Dans l'exemple décrit ici, la préforme 60 comprend 4 couches de texture fibreuse 100.

On procède ensuite à la densification de la préforme fibreuse 60 par une matrice.

La densification de la préforme fibreuse consiste à combler la porosité de la préforme, dans tout ou partie du volume de celle-ci, par le matériau constitutif de la matrice.

La matrice peut être obtenue de façon connue en soi suivant le procédé par voie liquide. Le procédé par voie liquide consiste à imprégner la préforme par une composition liquide contenant un précurseur organique du matériau de la matrice. Le précurseur organique se présente habituellement sous forme d'un polymère, tel qu'une résine, éventuellement dilué dans un solvant. La préforme fibreuse est placée dans un moule pouvant être fermé de manière étanche avec un logement ayant la forme de la pièce finale moulée. Comme illustré sur la figure 8, la préforme fibreuse 60 est ici placée entre une pluralité de secteurs 54 formant contre-moule et le mandrin 50 formant support, ces éléments présentant respectivement la forme extérieure et la forme intérieure du carter à réaliser. Ensuite, on injecte le précurseur liquide de matrice, par exemple une résine, dans tout le logement pour imprégner la préforme.

La transformation du précurseur en matrice organique, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la pièce à réaliser. La matrice organique peut être notamment obtenue à partir de résines époxydes, telle que, par exemple, la résine époxyde à hautes performances vendue, ou de précurseurs liquides de matrices carbone ou céramique.

Dans le cas de la formation d'une matrice carbone ou céramique, le traitement thermique consiste à pyrolyser le précurseur organique pour transformer la matrice organique en une matrice carbone ou céramique selon le précurseur utilisé et les conditions de pyrolyse. A titre d'exemple, des précurseurs liquides de carbone peuvent être des résines à taux de coke relativement élevé, telles que des résines phénoliques, tandis que des précurseurs liquides de céramique, notamment de SiC, peuvent être des résines de type polycarbosilane (PCS) ou polytitanocarbosilane (PTCS) ou polysilazane (PSZ). Plusieurs cycles consécutifs, depuis l'imprégnation jusqu'au traitement thermique, peuvent être réalisés pour parvenir au degré de densification souhaité.

La densification de la préforme fibreuse peut être réalisée par le procédé bien connu de moulage par transfert dit RTM (« Resin Transfert Moulding »). Conformément au procédé RTM, on place la préforme fibreuse dans un moule présentant la forme du carter à réaliser. Une résine thermodurcissable est injectée dans l'espace interne délimité entre la pièce en matériau rigide et le moule et qui comprend la préforme fibreuse. Un gradient de pression est généralement établi dans cet espace interne entre l'endroit où est injecté la résine et les orifices d'évacuation de cette dernière afin de contrôler et d'optimiser l'imprégnation de la préforme par la résine.

La résine utilisée peut être, par exemple, une résine époxyde. Les résines adaptées pour les procédés RTM sont bien connues. Elles présentent de préférence une faible viscosité pour faciliter leur injection dans les fibres. Le choix de la classe de température et/ou la nature chimique de la résine est déterminé en fonction des sollicitations thermomécaniques auxquelles doit être soumise la pièce. Une fois la résine injectée dans tout le renfort, on procède à sa polymérisation par traitement thermique conformément au procédé RTM.

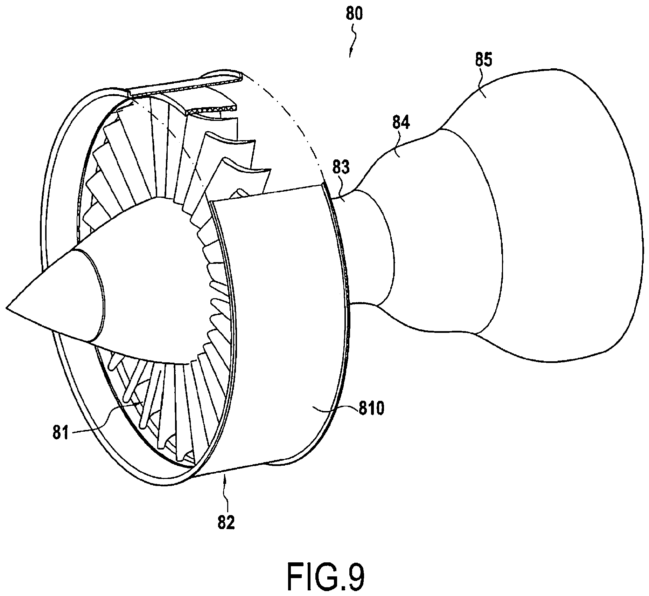

Après l'injection et la polymérisation, la pièce est démoulée. La pièce est finalement détourée pour enlever l'excès de résine et les chanfreins sont usinés pour obtenir un carter 810 présentant une forme de révolution comme illustré sur la figure 9.

Le carter 810 représenté sur la figure 9 est un carter d'une soufflante de moteur aéronautique à turbine à gaz 80. Un tel moteur, comme montré très schématiquement par la figure 8 comprend, de l'amont vers l'aval dans le sens de l'écoulement de flux gazeux, une soufflante 81 disposée en entrée du moteur, un compresseur 82, une chambre de combustion 83, une turbine haute-pression 84 et une turbine basse pression 85. Le moteur est logé à l'intérieur d'un carter comprenant plusieurs parties correspondant à différents éléments du moteur. Ainsi, la soufflante 81 est entourée par le carter 810.

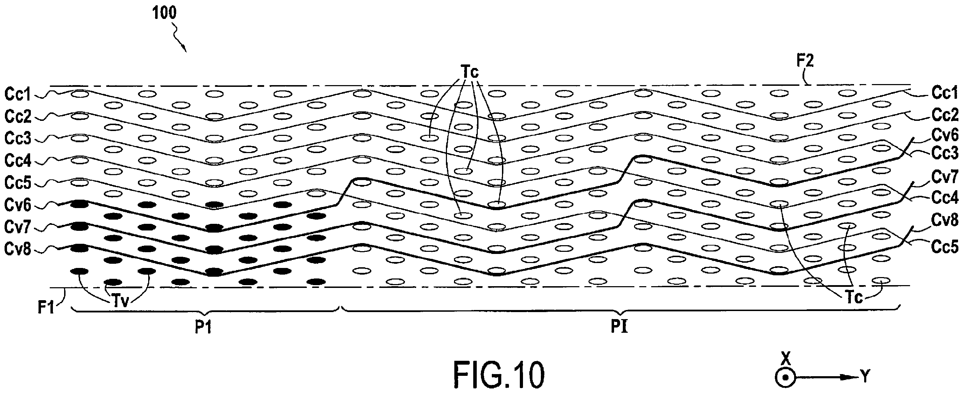

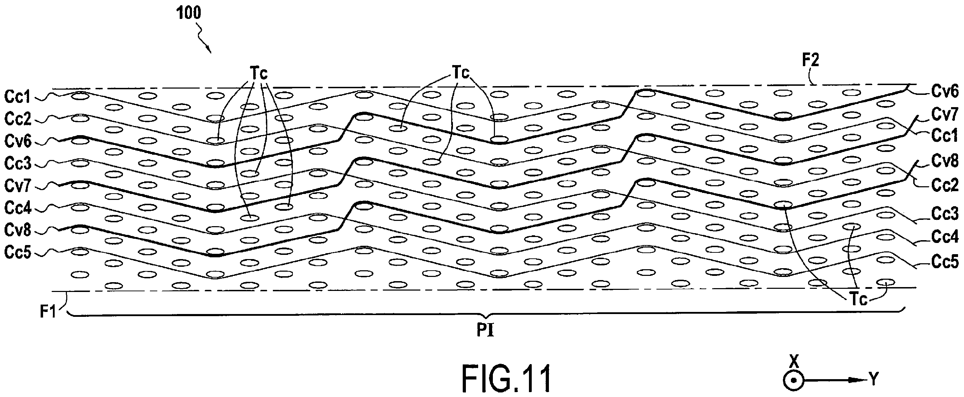

On a représenté aux figures 10 à 12 une variante de texture fibreuse 200 selon l'invention, dans laquelle certains fils ou torons de trame sont en fibres de verre (fils ou torons de tram Tv). Plus précisément, sur la figure 10 la première portion P1 comporte cinq couches de fils ou torons de chaîne présentes du côté de la face externe F2 de la texture fibreuse 200 comprenant des fils ou torons en fibres de carbone Cc1 à Cc5 et trois couches de fils ou torons de chaîne présentes du côté de la face interne F1 de la texture fibreuse comprenant des fils ou torons en fibres de carbone Cv6 à Cv8. En outre, les quatre premières couches de fils ou torons de trame présentes du côté de la face interne F1 de la structure fibreuse comprennent des fils ou torons de trame en fibres de verre notés Tv tandis que les autres couches des fils ou torons de trame présentes du côté de la face externe F2 de la texture fibreuse 200 comprennent des fils ou torons en fibres de carbone notés Te.

Une fois dans la portion intermédiaire PI, le tissage est piloté de manière à faire remonter progressivement les fils ou torons de chaîne en fibres de verre Cv6 à Cv8 vers la face externe F2 de la texture fibreuse par croisement avec des fils ou torons de chaîne en fibres de carbone Cc1 à Cc5. Dans la portion intermédiaire PI, toutes les couches de fils ou torons de trame comprennent des fils ou torons en fibres de carbone Tc (figures 10 à 12).

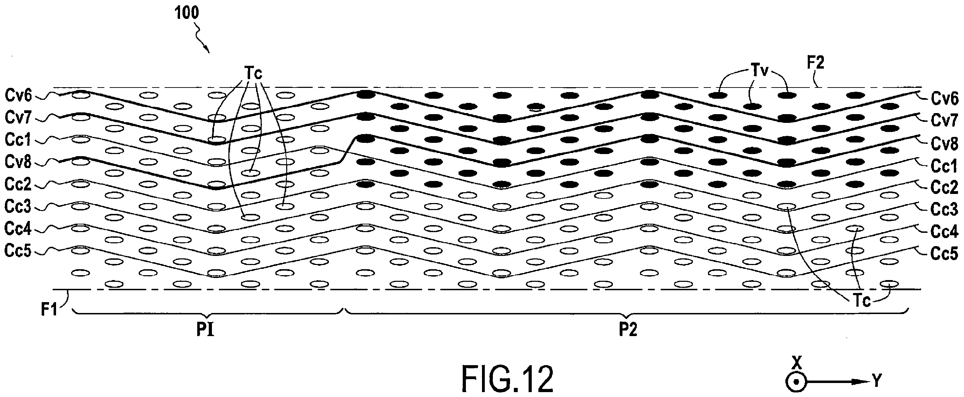

Sur la figure 12, la deuxième portion P2 comporte cinq couches de fils ou torons de chaîne présentes du côté de la face interne F1 de la texture fibreuse 100 comprenant les fils ou torons de chaîne en fibres de carbone Cc1 à Cc5 et trois couches de fils ou torons de chaîne présentes du côté de la face externe F2 de la texture fibreuse 100 comprenant les fils ou torons en fibres de carbone Cv6 à Cv8. En outre, les quatre premières couches de fils ou torons de trame présentes du côté de la face externe F2 de la structure fibreuse comprennent des fils ou torons de trame en fibres de verre notés Tv tandis que les autres couches des fils ou torons de trame présentes du côté de la face interne F1 de la texture fibreuse 200 comprennent des fils ou torons en fibres de carbone notés Tc.

## Revendications

1. Texture fibreuse (100) présentant une forme de bande s'étendant dans une direction longitudinale (X) sur une longueur déterminée (L₁₀₀) entre une partie proximale (110) et une partie distale (120) et dans une direction latérale (Y) sur une largeur déterminée (I₁₀₀) entre un premier bord latéral (101) et un deuxième bord latéral (102), la texture fibreuse présentant un tissage tridimensionnel ou multicouche entre une pluralité de couches de fils ou torons de chaîne (20) s'étendant dans la direction longitudinale et une pluralité de couches de fils ou torons de trame (30) s'étendant dans la direction latérale,
**caractérisée en ce que** la texture fibreuse comprend une première portion (P1) présente suivant la direction longitudinale entre la partie proximale (110) et une partie intermédiaire (PI), une ou plusieurs couches de fils ou torons de chaîne présentes du côté d'une face interne (F1) de la texture fibreuse (100) comportant au moins en partie des fils ou torons en fibres de verre (Cv6-Cv8), les fils ou torons des autres couches de fils ou torons de chaîne étant constitués de fils ou torons en fibres de carbone (Cc1-Cc5),
et **en ce que** la texture fibreuse comprend en outre une deuxième portion (P2) présente suivant la direction longitudinale entre la partie intermédiaire et la partie distale (120) de ladite texture fibreuse, une ou plusieurs couches de la pluralité de couches de fils ou torons de chaîne présentes du côté d'une face externe (F2) de la texture fibreuse (100) comportant au moins en partie des fils ou torons en fibres de verre (Cv6-Cv8), les fils ou torons des autres couches de la pluralité de couches de fils ou torons de chaîne étant constitués de fils ou torons en fibres de carbone (Cc1-Cc5), les fils ou torons de chaîne étant continus sur toute la longueur (L₁₀₀) de la texture fibreuse (100).

2. Texture selon la revendication 1, dans laquelle les fils ou torons de chaîne en fibres de verre (Cv6-Cv8) présents du côté de la face interne (F1) de la texture fibreuse (100) dans la première portion (P1) remontent progressivement vers la face externe (F2) de la texture fibreuse dans la partie intermédiaire (PI) de manière à être présents du côté de la face externe (F2) de ladite texture dans la deuxième portion (P2).

3. Texture fibreuse selon la revendication 1 ou 2, dans laquelle une ou plusieurs couches de la pluralité de couches de fils ou torons de trame présentes du côté de la face interne (F1) de la texture fibreuse (200) dans la première portion sont constituées de fils ou torons en fibres de verre (Tv), les fils ou torons des autres couches de la pluralité couches de fils ou torons de trame étant constitués de fils ou torons en fibres de carbone (Tc).

4. Texture fibreuse selon l'une quelconque des revendication 1 à 3, dans laquelle une ou plusieurs couches de la pluralité couches de fils ou torons de trame présentes du côté de la face externe (F2) de la texture fibreuse (200) dans la deuxième portion (P2) sont constituées de fils ou torons en fibres de verre (Tv), les fils ou torons des autres couches de la pluralité couches de fils ou torons de trame étant constitués de fils ou torons en fibres de carbone (Tc).

5. Préforme fibreuse (60) de carter aéronautique (810) comprenant un enroulement sur plusieurs tours d'une texture fibreuse (100) selon l'une quelconque des revendications 1 à 4, la première portion (P1) étant située du côté d'une face radialement interne de la préforme, et la deuxième portion (P2) étant située du côté d'une face radialement externe de la préforme.

6. Carter (810) de turbine à gaz en un matériau composite, comprenant un renfort fibreux constitué d'une préforme fibreuse (60) selon la revendication 5, et une matrice densifiant le renfort fibreux.

7. Carter (810) selon la revendication 6, dans lequel ledit carter est un carter de soufflante de turbine à gaz.

8. Moteur aéronautique à turbine à gaz (80) ayant un carter (810) selon la revendication 6 ou 7.

9. Procédé de fabrication d'une texture fibreuse (100) par tissage tridimensionnel ou multicouche entre une pluralité de couches de fils ou torons de chaîne (20) s'étendant dans une direction longitudinale (X) et une pluralité de couches de fils ou torons de trame (30) s'étendant dans la direction latérale (Y), la structure fibreuse présentant une forme de bande s'étendant dans la direction longitudinale (X) sur une longueur déterminée (L₁₀₀) entre une partie proximale (110) et une partie distale (120) et dans la direction latérale (Y) sur une largeur déterminée (I₁₀₀) entre un premier bord latéral (101) et un deuxième bord latéral (102),
**caractérisé en ce qu'**il comprend le tissage d'une première portion (P1) présente suivant la direction longitudinale entre la partie proximale (110) et une partie intermédiaire (PI), une ou plusieurs couches de fils ou torons de chaîne présentes du côté d'une face interne (F1) de la texture fibreuse (100) comportant au moins en partie des fils ou torons en fibres de verre (Cv6-Cv8), les fils ou torons des autres couches de fils ou torons de chaîne étant constitués de fils ou torons en fibres de carbone (Cc1-Cc5),
et **en ce qu'**il comprend en outre le tissage d'une deuxième portion (P2) présente suivant la direction longitudinale entre la partie intermédiaire et la partie distale (120) de ladite texture fibreuse, une ou plusieurs couches de la pluralité de couches de fils ou torons de chaîne présentes du côté d'une face externe (F2) de la texture fibreuse (100) comportant au moins en partie des fils ou torons en fibres de verre (Cv6-Cv8), les fils ou torons des autres couches de la pluralité de couches de fils ou torons de chaîne étant constitués de fils ou torons en fibres de carbone (Cc1-Cc5), les fils ou torons de chaîne étant continus sur toute la longueur (L₁₀₀) de la texture fibreuse (100).

10. Procédé selon la revendication 9, dans lequel les fils ou torons de chaîne en fibres de verre (Cv6-Cv8) présents du côté de la face interne (F1) de la texture fibreuse (100) dans la première portion (P1) remontent progressivement vers la face externe (F2) de la texture fibreuse dans la partie intermédiaire (PI) de manière à être présents du côté de la face externe (F2) de ladite texture dans la deuxième portion.

11. Procédé selon la revendication 9 ou 10, dans lequel une ou plusieurs couches de la pluralité couches de fils ou torons de trame présentes du côté de la face interne (F1) de la texture fibreuse (200) dans la première portion (P1) sont constituées de fils ou torons en fibres de verre (Tv), les fils ou torons des autres couches de la pluralité couches de fils ou torons de trame étant constitués de fils ou torons en fibres de carbone (Tc).

12. Procédé selon l'une quelconque des revendications 9 à 11, dans lequel une ou plusieurs couches de la pluralité couches de fils ou torons de trame présentes du côté de la face externe (F2) de la texture fibreuse (200) dans la deuxième portion sont constituées de fils ou torons en fibres de verre (Tv), les fils ou torons des autres couches de la pluralité couches de fils ou torons de trame étant constitués de fils ou torons en fibres de carbone (Tv).

## Patentansprüche

1. Fasertextur (100), die eine Bandform aufweist, die sich in einer Längsrichtung (X) über eine bestimmte Länge (L₁₀₀) zwischen einem proximalen Teil (110) und einem distalen Teil (120) und in einer seitlichen Richtung (Y) über eine bestimmte Breite (I₁₀₀) zwischen einem ersten seitlichen Rand (101) und einem zweiten seitlichen Rand (102) erstreckt, wobei die Fasertextur ein dreidimensionales oder mehrschichtiges Gewebe zwischen mehreren Schichten von Kettfäden oder -kardeelen (20), die sich in der Längsrichtung erstrecken, und mehreren Schichten von Schussfäden oder -kardeelen (30) aufweist, die sich in der seitlichen Richtung erstrecken,
**dadurch gekennzeichnet, dass** die Fasertextur einen ersten Abschnitt (P1) umfasst, der entlang der Längsrichtung zwischen dem proximalen Teil (110) und einem Zwischenteil (PI) vorhanden ist, wobei eine oder mehrere Schichten von Kettfäden oder -kardeelen, die auf der Seite einer inneren Fläche (F1) der Fasertextur (100) vorhanden sind, zumindest teilweise Fäden oder Kardeele aus Glasfasern (Cv6 - Cv8) beinhalten, wobei die Fäden oder Kardeele der anderen Schichten von Kettfäden oder -kardeelen aus Fäden oder Kardeelen aus Kohlenstofffasern (Cc1 - Cc5) bestehen,
und dadurch, dass die Fasertextur ferner einen zweiten Abschnitt (P2) umfasst, der entlang der Längsrichtung zwischen dem Zwischenteil und dem distalen Teil (120) der Fasertextur vorhanden ist, wobei eine oder mehrere Schichten von den mehreren Schichten von Kettfäden oder -kardeelen, die auf der Seite einer äußeren Fläche (F2) der Fasertextur (100) vorhanden sind, zumindest teilweise Fäden oder Kardeele aus Glasfasern (Cv6 bis Cv8) beinhalten, wobei die Fäden oder Kardeele der anderen Schichten von den mehreren Schichten von Kettfäden oder -kardeelen aus Fäden oder Kardeelen aus Kohlenstofffasern (Cc1 - Cc5) bestehen, wobei die Kettfäden oder - kardeele über die gesamte Länge (L₁₀₀) der Fasertextur (100) ununterbrochen sind.

2. Textur nach Anspruch 1, wobei die Kettfäden oder -kardeele aus Glasfasern (Cv6 - Cv8), die auf der Seite der inneren Fläche (F1) der Fasertextur (100) in dem ersten Abschnitt (P1) vorhanden sind, derart allmählich in Richtung der äußeren Fläche (F2) der Fasertextur in dem Zwischenteil (PI) aufsteigen, dass sie auf der Seite der äußeren Fläche (F2) der Textur in dem zweiten Abschnitt (P2) vorhanden sind.

3. Fasertextur nach Anspruch 1 oder 2, wobei eine oder mehrere Schichten von den mehreren Schichten von Schussfäden oder -kardeelen, die auf der Seite der inneren Fläche (F1) der Fasertextur (200) in dem ersten Abschnitt vorhanden sind, aus Fäden oder Kardeelen aus Glasfasern (Tv) bestehen, wobei die Fäden oder Kardeele der anderen Schichten von den mehreren Schichten von Schussfäden oder -kardeelen aus Fäden oder Kardeelen aus Kohlenstofffasern (Tc) bestehen.

4. Fasertextur nach einem der Ansprüche 1 bis 3, wobei eine oder mehrere Schichten von den mehreren Schichten von Schussfäden oder -kardeelen, die auf der Seite der äußeren Fläche (F2) der Fasertextur (200) in dem zweiten Abschnitt (P2) vorhanden sind, aus Fäden oder Kardeelen aus Glasfasern (Tv) bestehen, wobei die Fäden oder Kardeele der anderen Schichten von den mehreren Schichten von Schussfäden oder -kardeelen aus Fäden oder Kardeelen aus Kohlenstofffasern (Tc) bestehen.

5. Faservorform (60) eines Luftfahrtgehäuses (810), die eine Wicklung einer Fasertextur (100) nach einem der Ansprüche 1 bis 4 über mehrere Umwicklungen umfasst, wobei der erste Abschnitt (P1) sich auf der Seite einer radial inneren Fläche der Vorform befindet und der zweite Abschnitt (P2) sich auf der Seite einer radial äußeren Fläche der Vorform befindet.

6. Gasturbinengehäuse (810) aus Verbundmaterial, das eine Faserverstärkung umfasst, die aus einer Faservorform (60) nach Anspruch 5 und einer Matrix besteht, welche die Faserverstärkung verdichtet.

7. Gehäuse (810) nach Anspruch 6, wobei das Gehäuse ein Gasturbinen-Gebläsegehäuse ist.

8. Luftfahrt-Triebwerk mit Gasturbine (80), die ein Gehäuse (810) nach Anspruch 6 oder 7 umfasst.

9. Verfahren zur Herstellung einer Fasertextur (100) durch dreidimensionales oder mehrschichtiges Weben zwischen mehreren Kettfäden oder -kardeelen (20), die sich in einer Längsrichtung (X) erstrecken, und mehreren Schussfäden oder -kardeelen (30), die sich in der seitlichen Richtung (Y) erstrecken, wobei die Faserstruktur eine Bandform aufweist, die sich in der Längsrichtung (X) über eine bestimmte Länge (L₁₀₀) zwischen einem proximalen Teil (110) und einem distalen Teil (120) und in der seitlichen Richtung (Y) über eine bestimmte Breite (I₁₀₀) zwischen einem ersten seitlichen Rand (101) und einem zweiten seitlichen Rand (102) erstreckt,
**dadurch gekennzeichnet, dass** es das Weben eines ersten Abschnitts (P1) umfasst, der entlang der Längsrichtung zwischen dem proximalen Teil (110) und einem Zwischenteil (PI) vorhanden ist, wobei eine oder mehrere Schichten von Kettfäden oder -kardeelen, die auf der Seite einer inneren Fläche (F1) der Fasertextur (100) vorhanden sind, zumindest teilweise Fäden oder Kardeele aus Glasfasern (Cv6 - Cv8) beinhalten, wobei die Fäden oder Kardeele der anderen Schichten von Kettfäden oder -kardeelen aus Fäden oder Kardeelen aus Kohlenstofffasern (Cc1 - Cc5) bestehen,
und dadurch, dass es ferner das Weben eines zweiten Abschnitts (P2) umfasst, der entlang der Längsrichtung zwischen dem Zwischenteil und dem distalen Teil (120) der Fasertextur vorhanden ist, wobei eine oder mehrere Schichten von den mehreren Schichten von Kettfäden oder -kardeelen, die auf der Seite einer äußeren Fläche (F2) der Fasertextur (100) vorhanden sind, zumindest teilweise Fäden oder Kardeele aus Glasfasern (Cv6 - Cv8) beinhalten, wobei die Fäden oder Kardeele der anderen Schichten von den mehreren Schichten von Kettfäden oder -kardeelen aus Fäden oder Kardeelen aus Kohlenstofffasern (Cc1 - Cc5) bestehen, wobei die Kettfäden oder - kardeele über die gesamte Länge (L₁₀₀) der Fasertextur (100) ununterbrochen sind.

10. Verfahren nach Anspruch 9, wobei die Kettfäden oder -kardeele aus Glasfasern (Cv6 - Cv8), die auf der Seite der inneren Fläche (F1) der Fasertextur (100) in dem ersten Abschnitt (P1) vorhanden sind, derart allmählich in Richtung der äußeren Fläche (F2) der Fasertextur in dem Zwischenteil (PI) aufsteigen, dass sie auf der Seite der äußeren Fläche (F2) der Textur in dem zweiten Abschnitt vorhanden sind.

11. Verfahren nach Anspruch 9 oder 10, wobei eine oder mehrere Schichten von den mehreren Schichten von Schussfäden oder -kardeelen, die auf der Seite der inneren Fläche (F1) der Fasertextur (200) in dem ersten Abschnitt vorhanden sind, aus Fäden oder Kardeelen aus Glasfasern (Tv) bestehen, wobei die Fäden oder Kardeele der anderen Schichten von den mehreren Schichten von Schussfäden oder -kardeelen aus Fäden oder Kardeelen aus Kohlenstofffasern (Tc) bestehen.

12. Verfahren nach einem der Ansprüche 9 bis 11, wobei die eine oder mehreren Schichten von den mehreren Schichten von Schussfäden oder -kardeelen, die auf der Seite der äußeren Fläche (F2) der Fasertextur (200) in dem zweiten Abschnitt vorhanden sind, aus Fäden oder Kardeelen aus Glasfasern (Tv) bestehen, wobei die Fäden oder Kardeele der anderen Schichten von den mehreren Schichten von Schussfäden oder -kardeelen aus Fäden oder Kardeelen aus Kohlenstofffasern (Tv) bestehen.

## Claims

1. A fibrous texture (100) in the form of a web extending in a longitudinal direction (X) over a determined length (L₁₀₀) between a proximal part (110) and a distal part (120) and in a lateral direction (Y) over a determined width (I₁₀₀) between a first lateral edge (101) and a second lateral edge (102), the fibrous texture having a three-dimensional or multilayer weave between a plurality of layers of warp threads or strands (20) extending in the longitudinal direction and a plurality of layers of weft threads or strands (30) extending in the lateral direction,
**characterized in that** the fibrous texture comprises a first portion (P1) present in the longitudinal direction between the proximal part (110) and an intermediate part (PI), one or more layers of warp threads or strands present on the side of an inner face (F1) of the fibrous texture (100) at least partly comprising threads or strands of glass fibers (Cv6-Cv8), the threads or strands of the other layers of warp threads or strands comprising threads or strands of carbon fibers (Cc1-Cc5),
and **in that** the fibrous texture further comprises a second portion (P2) present in the longitudinal direction between the intermediate part and the distal part (120) of said fibrous texture, one or more of the plurality of layers of warp threads or strands present on the side of an outer face (F2) of the fibrous texture (100) at least partly comprising threads or strands of glass fibers (Cv6-Cv8), the threads or strands of the other layers of the plurality of layers of warp threads or strands comprising threads or strands of carbon fibers (Cc1-Cc5), the warp threads or strands being continuous over the entire length (L₁₀₀) of the fibrous texture (100).

2. The texture as claimed in claim 1, wherein the warp threads or strands of glass fibers (Cv6-Cv8) present on the side of the inner face (F1) of the fibrous texture (100) in the first portion (P1) rise gradually toward the outer face (F2) of the fibrous texture in the intermediate part (PI) so as to be present on the side of the outer face (F2) of said texture in the second portion (P2).

3. The fibrous texture as claimed in claim 1 or 2, wherein one or more of the plurality of layers of weft threads or strands present on the side of the inner face (F1) of the fibrous texture (200) in the first portion are constituted of threads or strands of glass fibers (Tv), the threads or strands of the other layers of the plurality of layers of weft threads or strands being constituted of threads or strands of carbon fibers (Tc).

4. The fibrous texture as claimed in any one of claims 1 to 3, wherein one or more of the plurality of layers of weft threads or strands present on the side of the outer face (F2) of the fibrous texture (200) in the second portion (P2) are constituted of threads or strands of glass fibers (Tv), the threads or strands of the other layers of the plurality of layers of weft threads or strands being constituted of threads or strands of carbon fibers (Tc).

5. A fibrous preform (60) for an aircraft casing (810) comprising a winding in several turns of a fibrous texture (100) as claimed in any one of claims 1 to 4, the first portion (P1) being located on the side of a radially inner face of the preform, and the second portion (P2) being located on the side of a radially outer face of the preform.

6. A casing (810) for a gas turbine made of a composite material, comprising a fibrous reinforcement consisting of a fibrous preform (60) as claimed in claim 5, and a matrix densifying the fibrous reinforcement.

7. The casing (810) as claimed in claim 6, wherein said casing is a gas turbine blower casing.

8. A gas turbine aircraft engine (80) having a casing (810) as claimed in claim 6 or 7.

9. A process for manufacturing a fibrous texture (100) by three-dimensional or multilayer weaving between a plurality of layers of warp threads or strands (20) extending in a longitudinal direction (X) and a plurality of layers of weft threads or strands (30) extending in the lateral direction (Y), the fibrous structure in the form of a web extending in the longitudinal direction (X) over a determined length (L₁₀₀) between a proximal part (110) and a distal part (120) and in the lateral direction (Y) over a determined width (I₁₀₀) between a first lateral edge (101) and a second lateral edge (102),
**characterized in that** it comprises weaving a first portion (P1) present in the longitudinal direction between the proximal part (110) and an intermediate part (PI), one or more layers of warp threads or strands present on the side of an inner face (F1) of the fibrous texture (100) at least partly comprising threads or strands of glass fibers (Cv6-Cv8), the threads or strands of the other layers of warp threads or strands comprising threads or strands of carbon fibers (Cc1-Cc5),
and **in that** it further comprises weaving a second portion (P2) present in the longitudinal direction between the intermediate part and the distal part (120) of said fibrous texture, one or more of the plurality of layers of warp threads or strands present on the side of an outer face (F2) of the fibrous texture (100) at least partly comprising threads or strands of glass fibers (Cv6-Cv8), the threads or strands of the other layers of the plurality of layers of warp threads or strands comprising threads or strands of carbon fibers (Cc1-Cc5), the warp threads or strands being continuous over the entire length (L₁₀₀) of the fibrous texture (100).

10. The process as claimed in claim 9, wherein the warp threads or strands of glass fibers (Cv6-Cv8) present on the side of the inner face (F1) of the fibrous texture (100) in the first portion (P1) gradually rise toward the outer face (F2) of the fibrous texture in the intermediate part (PI) so as to be present on the side of the outer face (F2) of said texture in the second portion.

11. The process as claimed in claim 9 or 10, wherein one or more of the plurality of layers of weft threads or strands present on the side of the inner face (F1) of the fibrous texture (200) in the first portion (P1) are constituted of threads or strands of glass fibers (Tv), the threads or strands of the other layers of the plurality of layers of weft threads or strands being constituted of threads or strands of carbon fibers (Tc).

12. The process as claimed in any one of claims 9 to 11, wherein one or more layers of the plurality of layers of weft threads or strands present on the side of the outer face (F2) of the fibrous texture (200) in the second portion are constituted of threads or strands of glass fibers (Tv), the threads or strands of the other layers of the plurality of layers of weft threads or strands being constituted of threads or strands of carbon fibers (Tv).
